# EUROPÄISCHE PATENTANMELDUNG

(11) **EP 2 045 711 A2**
(43) Veröffentlichungstag der Anmeldung: **08.04.2009**
(21) Anmeldenummer: 08017190.3
(22) Anmeldetag: 30.09.2008
(51) Int. Cl.: G06F 3/12

(54) **Proofsystem für Druckprodukte**

(30) Priorität: 02.10.2007 DE 102007047325
(71) Anmelder: manroland AG, 63012 Offenbach (DE)
(72) Erfinder: Fejfar, Florian, 81476 München (DE)
(74) Vertreter: Ulrich, Thomas

(57) **Zusammenfassung**

Die Erfindung betrifft ein Proofsystem (10) für Druckprodukte zur Erzeugung einer farblichen Referenz für ein zu druckendes Druckprodukt zur Visualisierung desselben als Proof, mit einer Einrichtung (11), die unter Verwendung einer Beschreibung (12a, 12b, 12c, 12d) einer farblichen Wiedergabe der zu simulierenden Auflagendruckeinrichtung, insbesondere der zu simulierenden Druckmaschine, und unter Verwendung einer Beschreibung (13) einer farblichen Wiedergabe des Proofsystems aus Bilddaten (14) Proofdaten (15) generiert, die über das Proofsystem anzeigbar sind. Erfindungsgemäß ist die Beschreibung (12a, 12b, 12c, 12d) der farblichen Wiedergabe der zu simulierenden Auflagendruckeinrichtung automatisiert auf Basis von Daten (17), die zumindest für die zu simulierende Auflagendruckeinrichtung gültige Druckparameter umfassen, auswählbar.

## Beschreibung

Die Erfindung betrifft ein Proofsystem für Druckprodukte nach dem Oberbegriff des Anspruchs 1. Des weiteren betrifft die Erfindung ein Verfahren zur Erzeugung einer farblichen Referenz für ein zu druckendes Druckprodukt zur Visualisierung desselben als Proof nach dem Oberbegriff des Anspruchs 9.

Als farbliche Referenz bei der Ausführung eines Druckauftrags auf einer Druckmaschine, wie z. B. auf einer Rollenrotationsdruckmaschine oder auf einer Bogendruckmaschine, dient nach der Praxis üblicherweise ein auf einem Farbtintenstrahldrucker angefertigtes Referenzmuster, wobei ein Drucker die auf der Druckmaschine gedruckten Druckexemplare mit diesem Referenzmuster an einem Leitstand der Druckmaschine vergleicht. Solche auf einem Farbtintenstrahldrucker geduckten Referenzmuster bezeichnet man auch als Hardcopyproof. Weiterhin ist es bereits bekannt, zusätzlich zu dem oder als Ersatz für das auf dem Farbtintenstrahldrucker angefertigte Hardcopyproof eine farbliche Referenz auf einem farbverbindlichen Monitor eines Leitstands zu visualisieren. Die Visualisierung einer solchen farblichen Referenz auf einem farbverbindlichen Monitor wird auch als Softproof bezeichnet. Die hier vorliegende Erfindung betrifft ein Proofsystem für Druckprodukte, welches sowohl als Hardcopyproofsystem als auch als Softproofsystem ausgebildet sein kann.

Aus der Praxis bekannte Proofsysteme verfügen über eine Einrichtung, die unter Verwendung einer Beschreibung einer farblichen Wiedergabe der zu simulierenden Auflagendruckeinrichtung sowie unter Verwendung einer Beschreibung einer farblichen Wiedergabe des Proofsystems aus Bilddaten, vorzugsweise aus Druckvorstufedaten, Proofdaten generiert, die über das Proofsystem als farbliche Referenz für ein zu druckendes Druckprodukt angezeigt werden können.

Dabei erfolgt bei aus der Praxis bekannten Proofsystemen die Auswahl der Beschreibung der farblichen Wiedergabe der zu simulierenden Auflagendruckeinrichtung manuell, wodurch sehr leicht eine falsche Auswahl getroffen werden kann und wodurch dann ein falsches Proof vom Proofsystem angezeigt wird. Dies ist von Nachteil.

Hiervon ausgehend liegt der vorliegenden Erfindung das Problem zugrunde ein neuartiges Proofsystem zu schaffen. Dieses Problem wird durch ein Proofsystem gemäß Anspruch 1 gelöst. Erfindungsgemäß ist die Beschreibung der farblichen Wiedergabe der zu simulierenden Auflagendruckeinrichtung automatisiert auf Basis von Daten, die zumindest für die zu simulierende Auflagendruckeinrichtung gültige Druckparameter umfassen, auswählbar.

Beim erfindungsgemäßen Proofsystem erfolgt die Auswahl der Beschreibung der farblichen Wiedergabe der zu simulierenden Auflagendruckeinrichtung automatisch auf Basis von Daten über für die zu simulierende Auflagendruckeinrichtung gültige Druckparameter. Fehlbedienungen durch einen Drucker und demnach die Auswahl einer falschen Beschreibung der farblichen Wiedergabe der zu simulierenden Auflagendruckeinrichtung können so vermieden werden, sodass stets als Proof die richtige farbliche Referenz für ein zu druckendes Druckprodukt ausgegeben bzw. angezeigt wird.

Das erfindungsgemäße Verfahren zur Erzeugung einer farblichen Referenz für ein zu druckendes Druckprodukt ist in Anspruch 9 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:

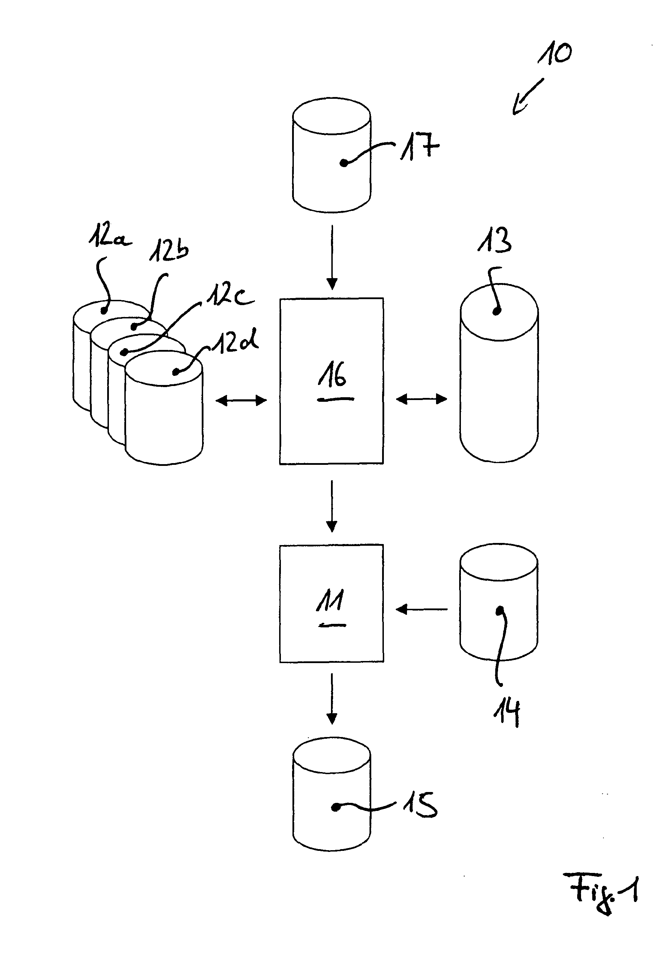

- Fig. 1:: eine schematisierte Darstellung eines erfindungsgemäßen Proofsystems.

Die hier vorliegende Erfindung betrifft ein Proofsystem für Druckprodukte zur Erzeugung einer farblichen Referenz für ein zu druckendes Druckprodukt zur Visualisierung desselben als Proof, wobei das Proofsystem sowohl als Hardcopyproofsystem als auch als Softproofsystem ausgebildet sein kann. Bei einem Softproofsystem wird als Softproof eine farbliche Referenz auf einem farbverbindlichen Monitor angezeigt. Bei einem Hardcopyproofsystem wird als Hardcopyproof eine farbliche Referenz auf einen Tintenstrahldrucker gedruckt.

Fig. 1 zeigt den prinzipiellen Aufbau eines erfindungsgemäßen Proofsystems 10. Das Proofsystem 10 verfügt über eine Einrichtung 11, die unter Verwendung einer Beschreibung 12a oder 12b oder 12c oder 12d einer farblichen Wiedergabe der zu simulierenden Auflagendruckeinrichtung, insbesondere der zu simulierenden Druckmaschine, und unter Verwendung einer Beschreibung 13 einer farblichen Wiedergabe des Softproofsystems aus Bilddaten 14 Proofdaten 15 generiert, die über das Proofsystem anzeigbar bzw. ausgebbar sind.

So zeigt Fig. 1 als Datensätze 12a, 12b, 12c und 12d schematisiert vier mögliche Beschreibungen der farblichen Wiedergabe der zu simulierenden Auflagendruckeinrichtung sowie als Datensatz 13 die Beschreibung der farblichen Wiedergabe des Proofsystems. Zur Erzeugung einer korrekten farblichen Referenz muss aus den Datensätzen 12a bis 12d derjenige ausgewählt werden, der die farbliche Wiedergabe der zu simulierenden Auflagendruckeinrichtung unter den an derselben herrschenden Druckparametern korrekt beschreibt, um so aus den Bilddaten 14 bei welchen es sich typischerweise um Druckvorstufedaten handelt, Proofdaten 15 zu generieren, die auf dem Proofsystem als korrekte farbliche Referenz für das zu druckende Druckprodukt angezeigt werden können.

Im Sinne der hier vorliegenden Erfindung erfolgt die Auswahl der Beschreibung der farblichen Wiedergabe der zu simulierenden Auflagendruckeinrichtung automatisiert auf Basis von Daten, die zumindest für die zu simulierende Auflagendruckeinrichtung gültige Druckparameter umfassen, wobei hierzu die in Fig. 1 dargestellte Auswahleinrichtung 16 dient. Der Auswahleinrichtung 16 werden Daten 17, die zumindest die für die zu simulierende Auflagendruckeinrichtung gültigen Druckparameter umfassen, bereitgestellt, wobei die Auswahleinrichtung 16 auf Basis dieser Daten aus den Datensätzen 12a bis 12d diejenige Beschreibung der farblichen Wiedergabe der zu simulierenden Auslagendruckeinrichtung auswählt, welche die für die zu simulierende Auflagendruckeinrichtung gültigen Druckparameter am besten wiederspiegelt. Die Auswahleinrichtung übermittelt einen der Datensätze 12a bis 12d sowie den Datensatz 13, der die farbliche Wiedergabe des Proofsystems beschreibt, an die Einrichtung 11, die unter Verwendung der oben erwähnten Beschreibungen über die farbliche Wiedergabe der zu simulierenden Auflagendruckeinrichtung sowie des Proofsystems aus den Bilddaten 14 die Proofdaten 15 erzeugt.

Die Daten 17, die zumindest die für die zu simulierende Auflagendruckeinrichtung gültigen Druckparameter umfassen, können am Proofsystem über eine Eingabeeinrichtung manuell eingegeben werden.

Andererseits ist es möglich, die Daten 17 dem Proofsystem automatisch zu übermitteln, z. B. von einem Druckmaschinensteuerungssystem und/oder einem Druckvorstufesystem und/oder ein Druckplanungs- und Verwaltungssystem.

Ferner kann auf Basis der Daten 17 ein Druckmaschinensteuerungssystem und/oder ein Druckvorstufesystem und/oder ein Druckplanungs- und Verwaltungssystem die Beschreibung der farblichen Wiedergabe der zu simulierenden Auflagendruckeinrichtung automatisiert auswählen und diese ausgewählte Beschreibung der Einrichtung 11 automatisch übermitteln.

Bei den Daten 17, auf Grundlage derer die automatische Auswahl der Beschreibung der farblichen Wiedergabe der zu simulierenden Auflagendruckeinrichtung erfolgt, handelt es sich vorzugsweise um den verwendeten Bedruckstoff oder den verwendeten Bedruckstofftyp und/oder die verwendete Druckfarbe oder den verwendeten Druckfarbetyp und/oder das verwendete Feuchtmittel oder den verwendeten Feuchtmitteltyp und/oder um die an der Auflagendruckeinrichtung vorliegende Druckfarbeführung und/oder Feuchtmittelführung. Ferner können als Druckparameter auch Angaben zur Tonwertzunahme und/oder den Farborten von Volltonfarben und/oder den Farborten des Zusammendrucks von zwei oder mehr Druckfarben berücksichtigt werden.

Bei den Datensätzen 12a bis 12d, welche die Beschreibung der farblichen Wiedergabe der zu simulierenden Auflagendruckeinrichtung enthalten, sowie bei dem Datensatz 13, welcher die Beschreibung der farblichen Wiedergabe des Proofsystems enthält, handelt es sich typischerweise um sogenannte ICC-Profile.

Die automatische Auswahl eines der Datensätze 12a bis 12b und damit die automatische Auswahl der farblichen Wiedergabe der zu simulierenden Auflagendruckeinrichtung erfolgt in der Auswahleinrichtung 16 auf Basis einer in einer Datenbank oder in einer Tabelle gespeicherten Zuordnung zwischen den vorgegebenen Datensätzen 12a bis 12b bzw. den vorgegebenen farblichen Wiedergaben der zu simulierenden Auflagendruckeinrichtung und vorgegebenen Druckparametern. Aus den vorgegebenen Beschreibungen der farblichen Wiedergabe der zu simulierenden Auflagendruckeinrichtung wird diejenige ausgewählt, die hinsichtlich der für diese abgespeicherten Druckparameter die größte Übereinstimmung mit den Druckparametern aufweist, die über den Datensatz 17 vorgegeben werden. Kann für die Druckparameter, die durch den Datensatz 17 vorgegeben werden keine geeignete Beschreibung der farblichen Wiedergabe der zu simulierenden Auflagendruckeinrichtung ermittelt werden, so kann vom Proofsystem 10 eine Fehlermeldung ausgegeben werden.

Es liegt demnach im Sinne der hier vorliegenden Erfindung auf Grundlage von Druckparametern, die für eine zu simulierende Auflagendruckeinrichtung gültig sind, automatisch diejenige Beschreibung der farblichen Wiedergabe der zu simulierenden Auflagendruckeinrichtung auszuwählen, die zu den vorliegenden Druckparametern passt. Auf Basis dieser automatisch ausgewählten Beschreibung der farblichen Wiedergabe der zu simulierenden Auflagendruckeinrichtung sowie auf Grundlage der Beschreibung der farblichen Wiedergabe des Proofsystems werden dann aus Bilddaten Proofdaten generiert.

### Bezugszeichenliste

- 10: Proofsystem
- 11: Einrichtung
- 12: Datensatz
- 13: Datensatz
- 14: Bilddaten
- 15: Proofdaten
- 16: Auswahleinrichtung
- 17: Datensatz

## Patentansprüche

1. Proofsystem für Druckprodukte zur Erzeugung einer farblichen Referenz für ein zu druckendes Druckprodukt zur Visualisierung desselben als Proof, mit einer Einrichtung, die unter Verwendung einer Beschreibung einer farblichen Wiedergabe der zu simulierenden Auflagendruckeinrichtung, insbesondere der zu simulierenden Druckmaschine, und unter Verwendung einer Beschreibung einer farblichen Wiedergabe des Proofsystems aus Bilddaten Proofdaten generiert, die über das Proofsystem anzeigbar sind, **dadurch gekennzeichnet, dass** die Beschreibung (12a, 12b, 12c, 12d) der farblichen Wiedergabe der zu simulierenden Auflagendruckeinrichtung automatisiert auf Basis von Daten (17), die zumindest für die zu simulierende Auflagendruckeinrichtung gültige Druckparameter umfassen, auswählbar ist.

2. Proofsystem nach Anspruch 1, **dadurch gekennzeichnet, dass** die zumindest die Druckparameter umfassenden Daten an einer Eingabeeinrichtung des Proofsystems eingebbar sind, und dass auf Basis der eingegeben Daten die Beschreibung (12a, 12b, 12c, 12d) der farblichen Wiedergabe der zu simulierenden Auflagendruckeinrichtung automatisiert auswählbar ist.

3. Proofsystem nach Anspruch 1, **dadurch gekennzeichnet, dass** die zumindest die Druckparameter umfassenden Daten dem Proofsystem von einem Druckmaschinensteuerungssystem und/oder einem Druckvorstufesystem und/oder einem Druckplanungs- und Verwaltungssystem automatisch übermittelbar sind, und dass auf Basis der automatisch übermittelten Daten die Beschreibung (12a, 12b, 12c, 12d) der farblichen Wiedergabe der zu simulierenden Auflagendruckeinrichtung automatisiert auswählbar ist.

4. Proofsystem nach Anspruch 1, **dadurch gekennzeichnet, dass** auf Basis der zumindest die Druckparameter umfassenden Daten ein Druckmaschinensteuerungssystem und/oder ein Druckvorstufesystem und/oder ein Druckplanungsund Verwaltungssystem die Beschreibung der farblichen Wiedergabe der zu simulierenden Auflagendruckeinrichtung automatisiert auswählt und diese ausgewählte Beschreibung dem Proofsystem automatisch übermittelt.

5. Proofsystem nach einem der Ansprüche 1 bis 4, **dadurch gekennzeichnet, dass** die Beschreibung der farblichen Wiedergabe der zu simulierenden Auflagendruckeinrichtung automatisiert auf Basis von Daten über den verwendeten Bedruckstoff oder den verwendeten Bedruckstofftyp auswählbar ist.

6. Proofsystem nach einem der Ansprüche 1 bis 5, **dadurch gekennzeichnet, dass** die Beschreibung der farblichen Wiedergabe der zu simulierenden Auflagendruckeinrichtung automatisiert auf Basis von Daten über die verwendete Druckfarbetyp oder den verwendeten Druckfarbetyp auswählbar ist.

7. Proofsystem nach einem der Ansprüche 1 bis 6, **dadurch gekennzeichnet, dass** die Beschreibung farblichen Wiedergabe der zu simulierenden Auflagendruckeinrichtung automatisiert auf Basis von Daten über das verwendete Feuchtmittel oder den verwendeten Feuchtmitteltyp auswählbar ist.

8. Proofsystem nach einem der Ansprüche 1 bis 7, **dadurch gekennzeichnet, dass** die Beschreibung (12a, 12b, 12c, 12d) der farblichen Wiedergabe der zu simulierenden Auflagendruckeinrichtung automatisiert auf Basis von Daten über die Druckfarbeführung und/oder Feuchtmittelführung an der Auflagendruckeinrichtung auswählbar ist.

9. Proofsystem nach einem der Ansprüche 1 bis 8, **dadurch gekennzeichnet, dass** die automatische Auswahl der Beschreibung der farblichen Wiedergabe der zu simulierenden Auflagendruckeinrichtung auf Basis einer in einer Datenbank oder in einer Tabelle gespeicherten Zuordnung zwischen vorgegebenen Beschreibungen der farblichen Wiedergabe der zu simulierenden Auflagendruckeinrichtung und vorgegebenen Druckparametern erfolgt.

10. Verfahren zur Erzeugung einer farblichen Referenz für ein zu druckendes Druckprodukt zur Visualisierung desselben als Proof, wobei unter Verwendung einer Beschreibung einer farblichen Wiedergabe der zu simulierenden Auflagendruckeinrichtung, insbesondere der zu simulierenden Druckmaschine, und unter Verwendung einer Beschreibung einer farblichen Wiedergabe des Proofsystems aus Bilddaten Proofdaten generiert werden, die über das Proofsystem angezeigt werden, **dadurch gekennzeichnet, dass** die Beschreibung der farblichen Wiedergabe der zu simulierenden Auflagendruckeinrichtung automatisiert auf Basis von Daten, die zumindest für die zu simulierende Auflagendruckeinrichtung gültige Druckparameter umfassen, ausgewählt werden.

11. Verfahren nach Anspruch 10, **gekennzeichnet durch** Merkmale nach einem oder mehreren der Ansprüche 2 bis 9.
